# EUROPÄISCHE PATENTSCHRIFT

(11) **EP 3 732 962 B1**
(45) Veröffentlichungstag und Bekanntmachung des Hinweises auf die Patenterteilung: **30.10.2024**
(21) Anmeldenummer: 20172400.2
(22) Anmeldetag: 30.04.2020
(51) Int. Cl.: A01M 25/00

(54) **KÖDERSTATION MIT LUFTKAMMER**
BAIT STATION WITH AIR CHAMBER
POSTE D'APPÂT POURVU DE CHAMBRE À AIR

(30) Priorität: 30.04.2019 DE 202019102423 U; 03.02.2020 DE 202020100577 U
(43) Veröffentlichungstag der Anmeldung: 04.11.2020
(73) Patentinhaber: Funke Kunststoffe GmbH, 59071 Hamm-Uentrop (DE)
(72) Erfinder: Funke, Hans-Günter, 48324 Sendenhorst (DE); Funke, Norbert, 48324 Sendenhorst (DE)
(74) Vertreter: Patentanwälte Olbricht Buchhold Keulertz

(56) Entgegenhaltungen:
- AU-B2- 2015 221 286
- DE-U1- 202015 008 952
- US-A1- 2017 295 773
- US-A1- 2017 360 024

## Beschreibung

Die Erfindung betrifft eine Köderstation, bei welcher das Lockmittel trocken gehalten wird. Eine typische Anwendung derartiger Köderstationen erfolgt in der Kanalisation im Einsatz gegen Schadnager wie z.B. Ratten. Dabei wird die Köderstation im Bereich des Kanalisationsschachtes eingesetzt, um für die Montage und die regelmäßige Wartung einen problemlosen Zugang zu der Köderstation zu gewährleisten. Nachfolgend wird daher die Köderstation stets am Beispiel der Anwendung in einem Kanalisationsschacht erläutert, wobei die Köderstation jedoch auch an anderen Orten verwendet werden kann. Bei einer Benutzung in einem Kanalisationsschacht wird durch die Ausgestaltung der gattungsgemäßen Köderstation der Köder weder von Niederschlagswasser noch von einem ansteigenden Wasserpegel innerhalb der Kanalisation überspült.

Aus der Praxis ist eine erste Bauart einer Köderstation bekannt, die auf der Wärme eines Kanalisationsschacht frei aufgestellt werden kann, grundsätzlich ringsum wasserdicht geschlossen ist und die, bezogen auf ihre Höhe, einen vergleichsweise großen Durchmesser und tiefen Schwerpunkt aufweist. Der Zugang zum Köder erfolgt durch eine Öffnung im Boden der Köderstation, wobei die Köderstation bis auf diesen Zugang frei von Öffnungen ist. Bodenstützen sorgen dafür, dass diese Öffnung zugänglich ist und sich im Abstand oberhalb des Untergrundes befindet, auf welchem die Köderstation steht. Bei steigendem Wasserpegel sorgt die Luftblase, die im Inneren der Köderstation eingeschlossen ist, für einen Auftrieb, so dass die Köderstation frei auf dem Wasser schwimmen kann. Aufgrund ihrer Proportionen und Gewichtsverteilung nimmt sie dabei eine stabile Schwimmlage ein. Mittels einer Köderhalterung ist der Köder in dieser Köderstation vergleichsweise weit oben angeordnet und wird daher stets trocken gehalten.

Aus der Praxis ist weiterhin eine Bauart von Köderstationen bekannt, die ortsfest an der Wand eines Kanalisationsschachtes montiert wird, als Rohrkörper ausgestaltet und oben verschlossen ist. Je nach Verlauf des Rohrkörpers kann die Köderhalterung als liegender Rohrabschnitt ausgestaltet sein, auf dem der Köder abgelegt wird. Dieser liegende, als Köderhalterung dienende Rohrabschnitt kann einen Anschlag aufweisen, der verhindert, dass der Köder innerhalb des Rohrkörpers abwärts rutscht und in Kontakt mit dem Wasser der Kanalisation gelangt. Der Zugang zum Köder für die anzulockenden Tiere erfolgt ebenfalls von unten. Der Köder ist vergleichsweise hoch angeordnet, so dass er bei niedrigem Wasserpegel nicht mit dem Wasser in Kontakt kommt. In einer ersten Variante dieser Bauart ist ein Verschlusselement vorgesehen, welches bei steigendem Wasserpegel angehoben wird und den Zugang verschließt. In einer anderen Variante dieser Bauart ist der Rohrkörper unten stets offen, so dass ein steigender Wasserpegel auch innerhalb des Rohrkörpers geringfügig ansteigen kann und dabei die im Rohrkörper eingeschlossene Luftblase komprimiert, jedoch nicht vollständig verdrängt. Ein Köder, der im oberen Bereich der Köderstation innerhalb des Rohrkörpers angeordnet ist, wird daher stets trocken gehalten.

Aus der US 2017/0295773 A1, die den am nächsten kommenden Stand der Technik darstellt, ist eine Köderstation bekannt, bei der die Köderhalterung als Block aus geschäumtem Polystyrol ausgestaltet ist und ein Köder auf den Polystyrolblock geklebt ist.

Der Erfindung liegt die Aufgabe zugrunde, eine Köderstation zu schaffen, die eine hohe Wirksamkeit durch einen einfachen Zugang zum Köder ermöglicht und bei höherem Wasserpegel den Köder zuverlässig trocken und für eine spätere weitere Verwendung, nach dem Absinken des Wasserpegels, bereithält sowie einen Kontakt mit dem Wasser der Kanalisation zuverlässig vermeidet.

Diese Aufgabe wird durch eine Köderstation mit den Merkmalen des Anspruchs 1 gelöst. Vorteilhafte Ausgestaltungen sind in den Unteransprüchen beschrieben.

Die Erfindung schlägt mit anderen Worten vor, innerhalb des Gehäuses als Halterung für den Köder eine Köderschale vorzusehen, in welcher der Köder angeordnet werden kann, und welche mitsamt dem Köder schwimmfähig ist. Weiterhin weist das Gehäuse in seinem unteren Bereich so genannte Wasseröffnungen auf, durch welche Wasser bei einem entsprechend ansteigenden Wasserpegel in das Gehäuse einströmen kann, so dass die Köderschale mitsamt dem darin befindlichen Köder innerhalb des Gehäuses auf dem dort befindlichen Wasserpegel aufschwimmt. Da auch bei steigendem Wasserpegel stets eine Luftblase im oberen Bereich des Gehäuses verbleibt, wird der Köder in seiner Köderschale stets trocken gehalten. Durch die erfindungsgemäße Ausgestaltung der Köderstation werden mehrere Vorteile bewirkt:
Erstens muss die Köderschale nicht hoch innerhalb der Köderstation angeordnet werden, um sie vor einem Kontakt mit dem Wasser zu schützen. Sie kann vielmehr so tief angeordnet werden, dass sie für die Tiere erreichbar ist, ohne dass die Tiere in die Höhe klettern müssen oder sich aufrichten und nach oben strecken müssen. Beispielsweise kann die Köderschale, wenn die Köderstation unten offen ausgestaltet ist, sogar unmittelbar auf dem Untergrund stehen, auf dem auch das Gehäuse der Köderstation steht, beispielsweise auf der Berme eines Kanalisationsschachtes. Durch die niedrige Anordnung der Köderschale ist für die anzulockenden Tiere ein problemloser Zugang zu dem Köder gewährleistet, wodurch die Akzeptanz des Köders und damit auch die Wirksamkeit der gesamten Köderstation verbessert werden kann.

Zweitens liegt der Köder auf der Köderschale auf, ist also nach unten hin vom Wasser abgetrennt. Im Unterschied zu einer nach unten offenen Konstruktion der Köderstation, bei welcher entweder beim Fressen entstehende Köderpartikel oder sogar der gesamte Köder nach unten fallen oder rutschen kann und in Kontakt mit dem Wasser geraten kann, wirkt die Köderschale wie eine Auffangschale für beim Fressen entstehende Partikel des Köders und verhindert damit deren Kontakt mit dem Wasser. Ohnehin muss der Köder nicht in einer Aufhängung gehalten werden, sondern kann in der Köderschale liegen, so dass er nicht von einer Aufhängung herabfallen kann. Nach oben ist der Köder durch das Gehäuse der Köderstation vor dem Kontakt mit Wasser geschützt, beispielsweise gegen den Kontakt mit Niederschlagswasser, das von oben in den Schacht gelangt ist. Im Ergebnis wird daher durch die erfindungsgemäße Ausgestaltung der Köderstation der Kontakt von Giftstoffen, die im Köder enthalten sind mit der Umgebung, beispielsweise dem Wasser in einer Kanalisation, besonders wirkungsvoll verhindert.

Drittens werden für die Ausgestaltung des Gehäuses der Köderstation größere konstruktive Freiheiten ermöglicht. Da der Köder nicht etwa von unten her zugänglich sein muss, sondern vielmehr in der Köderschale liegt und somit von oben zugänglich ist, kann das Gehäuse der Köderstation im Unterschied zu den Gehäusen der bekannten Köderstationen an seiner Unterseite geschlossen ausgestaltet werden und beispielsweise einen eigenen Boden aufweisen. Die Wasseröffnungen können in diesem Boden und / oder oberhalb eines solchen Bodens vorgesehen sein, um das Wasser in das Gehäuse einströmen zu lassen. Einen Gehäuseboden vorzusehen, bietet zusätzliche konstruktive Möglichkeiten, um die Köderstation auf einem Untergrund, z.B. innerhalb eines Kanalisationsschachtes, zu befestigen. Außerdem kann ein Boden des Gehäuses dazu beitragen, beim Fressen entstehende Partikel des Köders selbst dann innerhalb der Köderstation, nämlich innerhalb des Gehäuses zu behalten, wenn diese Partikel über den Rand der Köderschale gelangen und nach unten fallen sollten. Somit gelangen derartige Partikel nicht unmittelbar in die Umwelt, sondern es besteht die Möglichkeit, dass auch diese Partikel noch aufgenommen werden, bevor beispielsweise der Wasserpegel innerhalb des Kanalisationsschachtes ansteigt und das Wasser in Kontakt mit derartigen Partikeln kommen kann.

Viertens steht dadurch, dass beim Fressen entstehende Partikel des Köders in die Köderschale fallen und somit nicht aus der Köderstation heraus fallen und verlorengehen, das Ködermaterial für eine vergleichsweise längere Zeit als Lockmittel zur Verfügung, so dass innerhalb eines Wartungsintervalls die Funktionsfähigkeit der Köderstation, nämlich den Köder anzubieten, besonders zuverlässig gewährleistet werden kann.

Fünftens kann durch eine tiefe Anordnung der Köderschale die Akzeptanz des Köders und somit der gesamten Köderstation dadurch verbessert werden, dass dem natürlichen Verhalten der anzulockenden Tiere Rechnung getragen wird - je nachdem, welche Tierart angelockt werden soll und in Anpassung an deren spezifische Verhaltensweisen. Beispielsweise kann es vorteilhaft sein, dass der Köder von außen sichtbar ist, ohne dass ein Tier in das Gehäuse eindringen muss. Die Wasseröffnungen können beispielsweise als seitliche Öffnungen im Gehäuse ausgestaltet sein, durch die einerseits der Geruch des Köders nach außen dringen kann, durch die andererseits der Köder aber auch von außen sichtbar ist, und die bei entsprechend großer Dimensionierung auch einen Eingang bilden können, der den Zugang der Tiere in das Gehäuse ermöglicht. Insbesondere bei sehr vorsichtigen Tieren kann durch die optimale Präsentation des Köders die Hemmschwelle abgesenkt werden, sich dem Köder zu nähern. Weiterhin kann es vorteilhaft sein, dass sich das Tier auf oder neben den Köder bzw. in die Köderschale setzen kann, wenn dies dem natürlichen Fressverhalten der jeweiligen Tierart entspricht.

Der Zugang zu der in der Kanalisation angeordneten Köderstation erfolgt durch den Kanalisationsschacht. Auch wenn im Vergleich dazu, die Köderstation in einem Kanalrohr zwischen zwei Kanalisationsschächten anzuordnen, die Installation innerhalb des Kanalisationsschachtes einen vergleichsweise einfachen Zugang zu der Köderstation ermöglicht, so ist dieser Zugang doch immer noch einem nicht unerheblichen Aufwand verbunden: beispielsweise kann vorgeschrieben sein, dass der Zugang nur mit einem angelegten Schutzanzug sowie unter Mitführung eines Gaswarngerätes erfolgen darf, sowie unter Anwendung einer Personensicherung mittels eines Sicherungsseils, welches beispielsweise von einem Tripod, der zunächst über der Schachtmündung aufgebaut werden muss, zu der in den Schacht einsteigenden Person führt.

Daher kann die Köderstation vorteilhaft derart ausgestaltet sein, dass sie einen möglichst einfachen Zugriff auf die Köderstation von außerhalb eines Kanalisationsschachtes ermöglicht. Dies kann vorteilhaft dadurch ermöglicht werden, dass die Köderstation im Kanalisationsschacht verankert wird. In einer Ausgestaltung der Verankerungsmittel kann die Köderstation daher ortsfest im Kanalisationsschacht festgelegt werden. Alternativ dazu kann sie in einer anderen Ausgestaltung der Verankerungsmittel zumindest vom Kanalisationsschacht aus erreicht werden, so dass sie mittels der Verankerungsmittel eingeholt und zum Kanalisationsschacht herangezogen werden kann, beispielsweise wenn sie bewusst in Entfernung vom Kanalisationsschacht betrieben werden soll, oder wenn sie aus einer an sich vorgesehenen Gebrauchsstellung im Kanalisationsschacht versehentlich entfernt worden ist, beispielsweise durch eine besonders starke Strömung oder einen besonders hohen Pegelstand im Kanal.

Weiterhin kann vorteilhaft vorgesehen sein, dass der Köderstation ein Betätigungselement zugeordnet ist. Mit einem unteren Ende schließt das Betätigungselement an die Verankerungsmittel bzw. an die Köderstation an, entweder dauerhaft oder bei Bedarf. Das obere Ende des Betätigungselement reicht bis in die Nähe der Schachtmündung, nämlich wenigstens bis auf Armeslänge, oder ragt sogar über die Schachtmündung hinaus nach oben, so dass im Ergebnis das Betätigungselement jedenfalls von außerhalb des Schachtes betätigt werden kann und es nicht erforderlich ist, in den Kanalisationsschacht einzusteigen, um auf die Köderstation zugreifen zu können.

Beispielsweise können mittels des Betätigungselements die Verankerungsmittel oder die Köderstation selbst erfasst werden, so dass anschließend die Köderstation im Kanalisationsschacht angehoben und zur Inspektion oder Wartung aus dem Kanalisationsschacht entnommen werden kann.

Je nach Ausgestaltung der Verankerungsmittel sind diese entweder vom Kanalisationsschacht lösbar, so dass sie gemeinsam mit der Köderstation aus dem Schacht entnommen werden können. In diesem Fall reicht das Betätigungselement zumindest bis zu den Verankerungsmitteln, so dass diese von außerhalb des Schachtes erfasst werden können und anschließend mitsamt der Köderstation aus dem Schacht entnommen werden können. Das Betätigungselement schließt in diesem Fall mittelbar, nämlich über die Verankerungsmittel, an die Köderstation an.

Oder die Verankerungsmittel sind zweiteilig ausgestaltet, wobei ein erster Teil im Kanalisationsschacht verbleibt und die Köderstation mitsamt einem zweiten Teil der Verankerungsmittel von dem ersten Teil gelöst werden kann. In diesem Fall kann vorgesehen sein, dass das Betätigungsmittel unmittelbar an die Köderstation angeschlossen wird.

Jedenfalls ist im Ergebnis mithilfe der Verankerungsmittel die Handhabung der Köderstation möglich, ohne in den Kanalisationsschacht einsteigen zu müssen, so dass eine erheblich unkompliziertere und gesundheitlich risikoärmere Handhabung der Köderstation außerhalb des Kanalisationsschachtes in erheblich kürzerer Zeit möglich ist, als wenn hierzu der Einstieg in den Kanalisationsschacht erforderlich wäre. Da keine zweite Person zur Sicherung der in den Schacht einsteigen Person erforderlich ist, kann die Handhabung der Köderstation ggf. auch nur durch eine einzige Person erfolgen, so dass innerhalb derselben - ohnehin bereits kürzeren - Zeit eine Handhabung der doppelten Anzahl von Köderstationen ermöglicht wird.

In einer Ausgestaltung können die Verankerungsmittel weit nach oben, nämlich bis in die Nähe der Schachtmündung geführt sein. So können die Verankerungsmittel beispielsweise selbst gleichzeitig auch das Betätigungselement bilden, indem sie von außerhalb des Schachtes erfasst und dazu genutzt werden können, die Köderstation anzuheben oder nach Wartung bzw. Inspektion wieder abzulassen bzw. bei der erstmaligen Installation die Köderstation in den Schacht abzusenken. Insbesondere wenn die Verankerungsmittel bis auf Armeslänge an die Schachtmündung reichen, können sie unmittelbar erfasst werden. Falls jedoch ein zusätzliches Betätigungselement vorgesehen ist, kann dieses vergleichsweise kurz ausgestaltet und damit auf besonders einfache Weise handhabbar sein, wenn die Verankerungsmittel bis nahe an die Schachtmündung heran reichen.

In einer Ausgestaltung können die Verankerungsmittel einen flexiblen Strang aufweisen, beispielsweise in Form eines Seil oder einer Kette, und einen im Abstand von der Köderstation angeordneten Haken, der an diesem Strang befestigt ist. Mittels des Hakens kann die Köderstation beispielsweise an einem Steigbügel verankert werden, wie sie in vielen Kanalisationsschächten vorhanden sind. Sollte ein entsprechender Pegelstand oder eine entsprechende Strömung drohen, die Köderstation aus dem Schacht fortzuschwemmen, so sichert die Verankerung die Köderstation und lässt allenfalls eine Verlagerung um ein bestimmtes Maß zu, je nach Länge der Verankerungsmittel. Je höher sich die Verankerungsmittel erstrecken, desto kürzer braucht ein separates Betätigungselement ausgestaltet zu sein, und ggf. können die Verankerungsmittel selbst als Betätigungselement genutzt werden, um die Köderstation aufholen oder absenken zu können.

Der vorgenannte Haken an dem flexiblen Strang kann vorteilhaft als Mehrfachhaken ausgestaltet sein, also ähnlich wie ein Enterhaken drei oder vier Spitzen aufweisen, die jeweils um 120° bzw. um 90° zueinander versetzt angeordnet sind. Auf diese Weise ist der Haken besonders "fangsicher" ausgestaltet und die Wahrscheinlichkeit erhöht, dass bei unkontrollierten Bewegungen der Köderstation oder des flexiblen Strangs der Haken verfängt und die Köderstation zuverlässig verankert.

Insbesondere kann vorgesehen sein, dass der flexible Strang von der Köderstation aus im Kanalisationsschacht zunächst nach oben bis zum höchsten Steigbügel verläuft, dort um 180° um den Steigbügel und anschließend wieder abwärts verläuft. Der Haken muss nicht notwendigerweise in den obersten Steigbügel einhaken, vielmehr kann vorteilhaft vorgesehen sein, dass der flexible Strang weiter abwärts bis beispielsweise zur halben Schachthöhe verläuft und sich dort der Haken befindet. Sollte die Köderstation fortgeschwemmt werden, zieht sie die Verankerungsmittel mit sich, so dass der Haken entlang der Steigbügel nach oben gezogen wird. Mit großer Wahrscheinlichkeit verfängt sich der Haken an einem der Steigbügel, spätestens am obersten Steigbügel, so dass die Köderstation zwar um ein bestimmtes Maß verlagert wird, aber anschließend immer noch problemlos von außerhalb des Kanalisationsschachtes gehandhabt und wieder eingeholt werden kann.

Wenn die Verankerungsmittel den erwähnten flexiblen Strang samt Haken aufweisen, kann alternativ zu einer Verankerung an einem Steigbügel vorgesehen sein, die Verankerungsmittel an einem Schmutzfangkorb zu verankern, der typischerweise als oberstes Element, unmittelbar unterhalb des Schachtdeckels, in einem Kanalisationsschacht angeordnet ist, noch oberhalb der Steigbügel. Unabhängig davon, ob der Kanalisationsschacht überhaupt über Steigbügel verfügt oder nicht, kann der Haken jedenfalls problemlos und ohne zusätzliche Werkzeuge von außerhalb des Schachtes erfasst werden, weil er innerhalb einer Armeslänge von der Schachtmündung angeordnet ist. Die Schmutzfangkörbe weisen üblicherweise Hebemittel auf, z.B. durch zwei liegend angeordnete, gekreuzte Stäbe, um den mit Laub und dergleichen gefüllten Schmutzfangkorb problemlos aus dem Schacht herausheben zu können. Der Haken der Verankerungsmittel kann an derartigen Hebemitteln des Schmutzfangkaufs festgelegt werden und ist dementsprechend problemlos erreichbar.

In einer Ausgestaltung kann vorgesehen sein, dass die Verankerungsmittel zwei Komponenten aufweisen, die miteinander verriegelbar sind, wahlweise aber auch voneinander getrennt werden können. Die erste Komponente kann im Schacht festgelegt werden, beispielsweise an der Schachtwand oder auf dem Schachtboden, beispielsweise auf der Berme neben dem Gerinne. An der Schachtwand kann diese erste Komponente vorteilhaft im wesentlichen L-förmig ausgestaltet sein, mit einem aufrechten Abschnitt, der an der Schachtwand festgelegt wird, und mit einem liegenden Abschnitt, auf den von oben die Köderstation aufgesetzt werden kann.

Vorzugsweise ist allerdings vorgesehen, dass die erste Komponente auf dem Schachtboden befestigt wird, da eine solche Befestigung möglich ist, ohne in den Schacht einsteigen zu müssen. Beispielsweise kann vorgesehen sein, die erste Komponente mit dem Schachtboden zu verkleben. Der Schachtboden kann mittels entsprechend langer, z.B. teleskopierbarer, Werkzeuge von oben, insbesondere von außerhalb des Schachtes, für die Verklebung vorbereitet werden, z.B. gereinigt und entfettet, ggf. getrocknet und / oder erwärmt werden. Anschließend wird die erste Komponente an ihrer Unterseite mit Klebstoff versehen und auf die vorbereitete Stelle des Schachtbodens gedrückt. Wenn die Verklebung ausreichend fest ist, kann die Köderstation mit der zweiten Komponente der Verankerungsmittel mit der ersten Komponente der Verankerungsmittel verbunden werden, so dass nun die Köderstation im Schacht installiert ist.

Eine besonders zeiteffiziente Art, die Köderstation im Kanalisationsschacht zu installieren, kann darin bestehen, die Köderstation mitsamt der daran unten zusammenhängenden ersten Komponente der Verankerungsmittel in den Kanalisationsschacht einzusetzen. In diesem Fall wird die mit der Köderstation verbundene erste Komponente unten mit dem Klebstoff versehen und anschließend die Köderstation mitsamt beiden Komponenten der Verankerungsmittel auf den entsprechend vorbereiteten Schachtboden aufgesetzt. Ohne das Abbinden des Klebstoffs abwarten zu müssen, kann nun der Schacht verschlossen werden.

Bei der zweiteiligen Ausgestaltung der Verankerungsmittel ist vorgesehen, dass die Köderstation mitsamt der zweiten Komponente der Verankerungsmittel von oben auf die im Kanalisationsschacht festgelegte erste Komponente abgesenkt werden kann. Dies stellt eine erste Bewegung bei der Befestigung der Köderstation dar. Um die Köderstation verriegelungssicher an die erste Komponente heranführen zu können, kann die erste Komponente vorteilhaft hell gefärbt sein, so dass sie auch von außerhalb des Schachtes gut erkennbar ist. Insbesondere kann die Farbgebung - zumindest auf der von oben ersichtlichen Oberseite - der ersten Komponente kontrastfarbig zur Köderstation gewählt sein. Durch die Farbgebung der ersten Komponente kann jedenfalls erleichtert werden, die Köderstation von oben möglichst zentriert auf die erste Komponente der Verankerungsmittel aufzusetzen, um die beiden Komponenten verriegelungswirksam in Eingriff bringen zu können, ohne von oben die Positionierung der Köderstation mehrfach korrigieren und neu justieren zu müssen.

Nachdem die beiden Komponenten der Verankerungsmittel miteinander in Kontakt gebracht sind, erfolgt mittels einer zweiten Bewegung eine Verriegelung, um die gewünschte Verankerung der Köderstation im Kanalisationsschacht zu bewirken.

Diese zweite bzw. weitere Bewegung der Köderstation kann beispielsweise darin bestehen, dass die Köderstation weiter abgesenkt wird, ähnlich wie dies bei einer Druckverriegelung zur Betätigung von Kugelschreibern oder Möbelfronten bekannt ist. Später dient ein erneuter Druck dazu, die Verriegelung der beiden Komponenten zu lösen, so dass anschließend die die beiden Komponenten voneinander getrennt und die Köderstation angehoben werden kann.

Die zweite oder weitere Bewegung der Köderstation kann aber auch in einer anderen Bewegungsrichtung erfolgen, beispielsweise in einer an die Absenkbewegung anschließenden Drehbewegung. Beispielsweise kann eine gewindeartige Verschraubung vorgesehen sein. Als besonders betriebssicher und gegenüber Verschmutzungen unempfindlich kann jedoch die Drehbewegung in Art einer Bajonettverriegelung erfolgen, wobei bereits eine Viertel- oder Drittel-Drehung zur Ver- oder Entriegelung ausreichen kann und dementsprechend eine möglichst unkomplizierte, einfache Handhabung der Köderstation unterstützt. Zur Bajonettverriegelung können einerseits schlüssellochförmige, gebogene und auf einer Kreislinie angeordnete Öffnungen vorgesehen sein, sowie andererseits komplementäre Riegelzapfen, die einen pilzförmigen Querschnitt aufweisen. Alternativ kann einerseits eine äußere Umfangskontur vorgesehen sein, der andererseits Riegelelemente von außen anliegen, oder eine innere Umfangskontur, z.B. eines Rings, der andererseits Riegelelemente von innen anliegen. Die erwähnten Umfangskonturen weisen jeweils durch radial nach innen und nach außen ragende Abschnitte Bereiche auf, die das Ansetzen der jeweils komplementären Riegelelemente ermöglichen, und eine Drehbewegung bewirkt dann die Verriegelung zwischen den beiden Komponenten, z.B. durch Klemmung oder durch Verrastung.

Als erste Komponente, die im Kanalisationsschacht befestigt wird, kann vorteilhaft eine Konturscheibe dienen, die liegend ausgerichtet ist und deren Umfangskontur um eine aufrechte Mittelachse verläuft, und zwar in der Art, dass sie einerseits wenigstens zwei Freiräume bildet, und dass sich an jeden Freiraum in einer Drehrichtung um die Mittelachse ein Halteabschnitt anschließt. Die zweite, an der Köderstation festigte Komponente der Verankerungsmittel weist dazu komplementäre Vorsprünge auf, also ebenfalls wenigstens zwei, die von oben in die Freiräume der ersten Komponente eingesetzt werden können, wenn die Köderstation auf die erste Komponente der Verankerungsmittel abgesenkt wird. Wenn anschließend die Köderstation um die erwähnte Mittelachse gedreht wird, werden diese Vorsprünge gegen die Halteabschnitte der Umfangskontur der ersten Komponente geführt, so dass nun die Vorsprünge der zweiten Komponente an den Halteabschnitten der ersten Komponente gehalten sind und die beiden Komponenten der Verankerungsmittel miteinander verriegelt sind.

Die Konturscheibe der ersten Komponente kann vorteilhaft nicht als Ring ausgestaltet sein, bei dem die innere Umfangskontur zur Verriegelung mit der zweiten Komponente dient, sondern vielmehr kann die Konturscheibe vorteilhaft als geschlossene Scheibe ausgestaltet sein, deren äußere Umfangskontur zur Verriegelung dient. Durch diese möglichst glattflächige, geschlossene Ausgestaltung der ersten Komponente wird das Festsetzen von Störkörpern oder Verschmutzungen erschwert, so dass eine möglichst problemlose Betätigung der Verankerungsmittel auch von außerhalb des Kanalisationsschachtes über eine lange Nutzungsdauer der Köderstation hinweg gewährleistet werden kann.

Vorteilhaft kann eine regelrechte Verrastung der Vorsprünge der zweiten Komponente an der Konturscheibe der ersten Komponente vorgesehen sein, so dass die Verriegelung der Verankerungsmittel nicht nur durch Klemmung erreicht wird, sondern die Vorsprünge der zweiten Komponente vielmehr zwischen zwei radialen Vorsprüngen der Umfangskontur gehalten sind. Hierdurch wird erschwert, dass die Köderstation ungewollt und zufällig von der ersten Komponente der Verankerungsmittel getrennt werden könnte.

Das Betätigungselement, welches der Köderstation zugeordnet ist, kann vorteilhaft als Stange ausgestaltet sein, die zugfest an die Köderstation angeschlossen werden kann. Die Stange kann zum Ablassen oder zum Heraufheben der Köderstation dienen. Zusätzlich können mit ihr im Unterschied zu beispielsweise einem Seil auch Druck- oder Drehkräfte übertragen werden, z.B. um die erwähnten "Kugelschreiber"- oder "Bajonett"-Verriegelungen zu ermöglichen.

Die Stange kann an ihrem unteren Ende vorteilhaft L-förmig abgewinkelt verlaufen, so dass beispielsweise ein über die Stange ausgeübter und auf die Köderstation einwirkender Druck auf eine größere Fläche verteilt wird und die Köderstation so mechanisch geschont wird. Außerdem erleichtert die L-förmige Ausgestaltung die Übertragung von Drehbewegungen.

Vorteilhaft kann die Köderstation eine von außen durchsetzbare Öse aufweisen, die höher als der Schwerpunkt der Köderstation angeordnet ist. Die Öse kann nahezu beliebig ausgestaltet sein, z.B. als Loch in einer Wand der Köderstation oder als Bügel auf der Oberseite der Köderstation, jedenfalls ermöglicht sie, die Köderstation von außen zu erfassen und abzusenken bzw. anzuheben. Dadurch, dass sich der Schwerpunkt tiefer befindet als die Öse, behält die Köderstation ihre vorgesehene Ausrichtung weitgehend bei. Insbesondere vorteilhaft kann die Öse annähernd lotrecht oberhalb des Schwerpunkts angeordnet sein, so dass die Köderstation umso besser tatsächlich ihre vorgesehene Ausrichtung beibehält, wenn sie an der Öse hängt.

Ausführungsbeispiele der Erfindung werden nachfolgend anhand der rein schematischen Darstellungen näher erläutert. Dabei zeigt
- Fig. 1: eine Draufsicht auf eine erste Komponente von Verankerungsmitteln, die zur Verankerung einer Köderstation dienen, mit einem ersten Ausführungsbeispiel einer Konturscheibe,
- Fig. 2: eine Seitenansicht auf den unteren Bereich eines ersten Ausführungsbeispiels einer Köderstation, mit einer zweiten Komponente, die komplementär zu der ersten Komponente von Fig. 1 ausgestaltet ist,
- Fig. 3: eine perspektivische Ansicht von oben auf die Köderstation von Fig. 2, die an einem Betätigungselement hängt,
- Fig. 4: die Köderstation von Fig. 3 an dem Betätigungselement in einem Kanalisationsschacht,
- Fig. 5: ein zweites Ausführungsbeispiel einer Konturscheibe,
- Fig. 6: eine Köderstation mit einem weiteren Ausführungsbeispiel von Verankerungsmitteln, die einen flexiblen Strang und einen Mehrfachhaken aufweisen,
- Fig. 7: ein Element zur Längeneinstellung, wie es bei den Verankerungsmitteln der Fig. 6 verwendbar ist,
- Fig. 8: eine Ansicht von oben einen Kanalisationsschacht, mit einer Köderstation und den Verankerungsmitteln der Fig. 6,
- Fig. 9: eine Ansicht von oben ähnlich Fig. 8, wobei in den Kanalisationsschacht ein Schmutzfangkorb eingesetzt ist,
- Fig. 10: einen Vertikalschnitt durch einen Kanalisationsschacht,
- Fig. 11: eine perspektivische Ansicht auf eine Köderschale,
- Fig. 12: einen Vertikalschnitt durch die Köderschale von Fig. 11,
- Fig. 13: eine perspektivische Ansicht auf ein weiteres Ausführungsbeispiel einer Köderstation,
- Fig. 14: einen Vertikalschnitt durch die Köderstation von Fig. 13,
- Fig. 15: eine Ansicht aus einer anderen Perspektive auf die Köderstation von Fig. 13, mit einer daran befestigten Halterung,
- Fig. 16: einen Vertikalschnitt durch den oberen Bereich der Köderstation von Fig. 15, und
- Fig. 17: einen Vertikalschnitt durch die mit einer Köderschale bestückte Köderstation von Fig. 15.

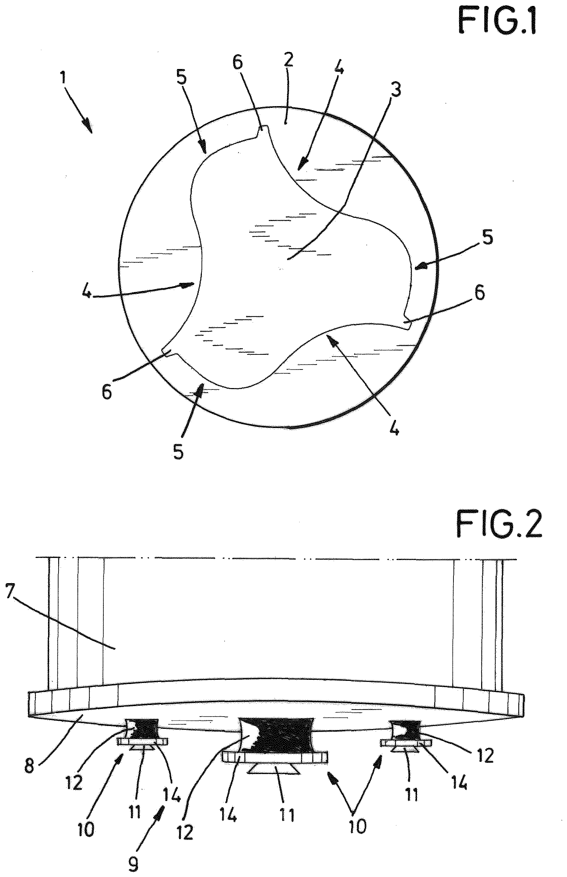

Fig. 1 zeigt eine erste Komponente 1 von Verankerungsmitteln, die nicht nur zur Verankerung, sondern auch zur ortsfesten Festlegung einer Köderstation in einem Kanalisationsschacht dienen. Die erste Komponente 1 weist eine Grundplatte 2 auf, die mit dem Schachtboden verklebt wird und zumindest an ihrer nach oben gerichteten Oberseite hell und im Vergleich zur übrigen Umgebung im Schacht kontrastfarbig ausgestaltet ist, beispielsweise weiß, orangerot oder gelb gefärbt ist. In einem geringen Abstand oberhalb der Grundplatte 2, beispielsweise etwa 10 mm oberhalb der Grundplatte 2, ist eine Konturscheibe 3 gehalten, die entlang ihres äußeren Umfangs, gleichmäßig um jeweils 120° versetzt, radial weiter innen angeordnete Abschnitte aufweist, die jeweils einen Freiraum 4 definieren. Im Uhrzeigersinn schließen sich an diese Freiräume 4 jeweils Halteabschnitte 5 an, die im Uhrzeigersinn jeweils durch einen Anschlag 6 begrenzt sind.

Fig. 2 zeigt den unteren Bereich einer Köderstation 7, mit einem Boden 8, der eine zweite Komponente 9 der Verankerungsmittel aufweist, wobei diese zweite Komponente 9 riegelwirksam komplementär zu der ersten Komponente 1 ausgestaltet ist. Die zweite Komponente 9 weist drei um 120° zueinander versetzt angeordnete Zapfen 10 auf, die jeweils aus einer in den Boden 8 eingeschraubten Schraube 11 sowie einem darauf aufgefädelten Elastomerring 12 und einer ebenfalls auf die Schraube 11 aufgefädelten Unterlegscheibe 14 bestehen.

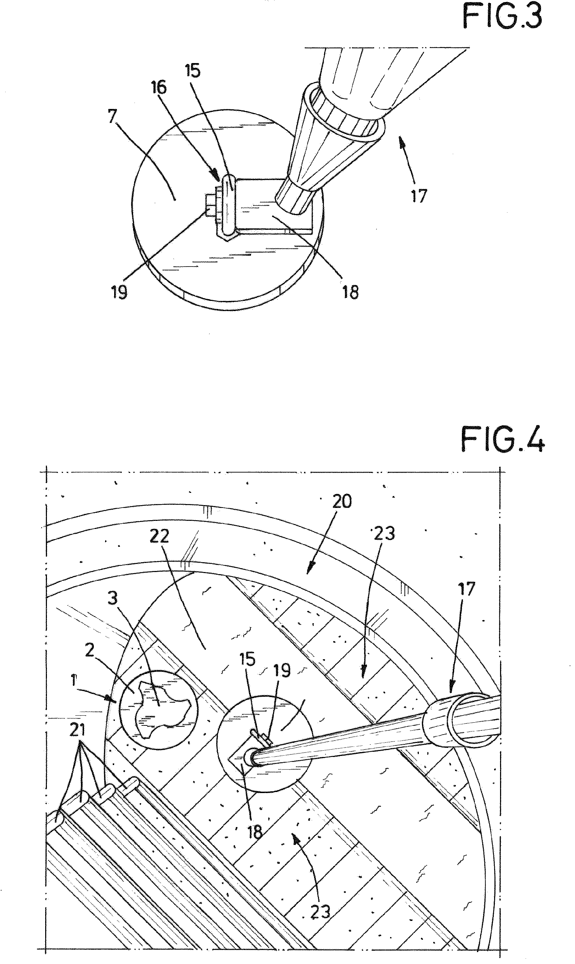

Fig. 3 zeigt die Köderstation 7 in einer Perspektive von oben. Sie weist oben einen Drahtbügel 15 auf, der eine Öse 16 schafft. Ein Betätigungselement 17 dient zur Handhabung der Köderstation 7 und ist in Form eines teleskopierbaren Stabes ausgestaltet, der an seinem unteren Ende L-förmig verläuft und außer seinem aufrechten, stabförmigen Abschnitt einen unteren, liegenden Abschnitt 18 aufweist. Bei dem dargestellten Ausführungsbeispiel ist der liegende Abschnitt 18 als Block ausgestaltet, in den stirnseitig eine vergleichsweise größere Schraube 19 eingeschraubt ist, die größer ist als die Schrauben 11 der Zapfen 10, und an welcher der Drahtbügel 15 und somit die gesamte Köderstation 7 hängt.

Fig. 4 zeigt die Köderstation 7 innerhalb eines Kanalisationsschachtes 20, wiederum an dem Betätigungselement 17 hängend, wobei das Betätigungselement 17 hier im auseinandergezogenen und somit verlängerten Zustand dargestellt ist. Die Schachtwandung ist mit Steigbügeln 21 versehen. Im Schachtboden ist einerseits ein Gerinne 22 sowie beiderseits davon eine Berme 23 ersichtlich. Auf die Berme 23 ist die erste Komponente 1 der Verankerungsmittel geklebt.

Mittels des Betätigungselements 17 kann die Köderstation 7 auf die erste Komponente 1 abgesenkt werden. Dabei wird die Köderstation 7 gedreht, bis sich die Zapfen 10 im Bereich der Freiräume 4 jeweils außerhalb und neben der Konturscheibe 3 befinden. Im Unterschied zu Fig. 1 ist die Konturscheibe 3 gemäß Fig. 4 so angeordnet, dass die Köderstation 7 mit ihrer zweiten Komponente 9 gegen den Uhrzeigersinn gedreht wird, um die Zapfen 10 von den Freiräumen 4 zu den Halteabschnitten 5 und bis gegen die Anschläge 6 zu führen. Durch die Klemmwirkung ist die Köderstation 7 an der ersten Komponente 1 verriegelt, und dadurch, dass die Unterlegscheiben 14 die Konturscheibe 3 untergreifen, auch gegen abhebende Kräfte gesichert.

Über 5 zeigt ein zweites Ausführungsbeispiel einer Konturscheibe 3, wobei hier die Festlegung der Zapfen 10 nicht nur durch Klemmung, sondern durch eine Verrastung bewirkt wird. Hierzu sind die Halteabschnitte 5 in beiden Drehrichtungen durch Anschläge 6 begrenzt, wobei der in Drehrichtung bei der Verriegelung zunächst erreichte Anschlag 6 radial weniger weit nach au-ßen ragt als der zweite, hintere Anschlag 6, der die Drehbewegung begrenzt und als Endanschlag bezeichnet werden kann.

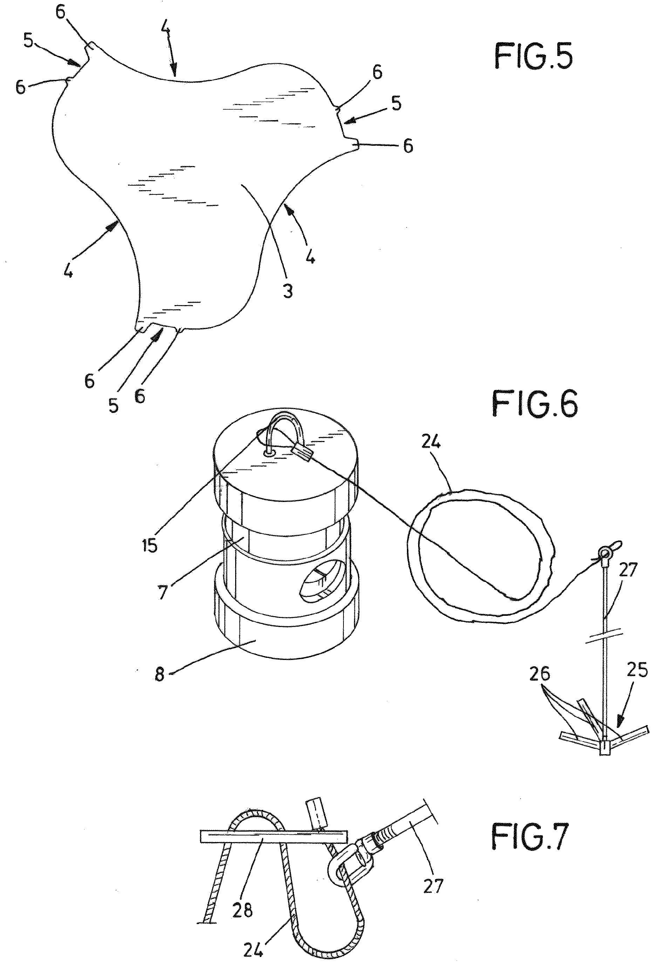

Fig. 6 zeigt eine die Köderstation 7, die weitgehend baugleich mit dem Ausführungsbeispiel der Fig. 1 bis 5 ausgestaltet ist, im Unterschied dazu jedoch einen deutlich stärkeren Boden 8 aufweist. Bei dem Ausführungsbeispiel der Fig. 6 ist nicht vorgesehen, die Köderstation 7 ortsfest im Kanalisationsschacht 20 zu befestigen. Sie wird lediglich in der Art verankert, dass sie gegen Verlust gesichert ist. Grundsätzlich soll diese Köderstation 7 eigenstabil auf der Berme 23 stehen. Der Boden 8 weist hierzu ein hohes Eigengewicht auf, um der Köderstation 7 die gewünschte Standfestigkeit zu verleihen. Der Boden 8 kann beispielsweise aus einem Betonwerkstoff bestehen oder ein Gehäuse aus Kunststoff aufweisen, welches mit einem Beschwerungsmaterial zum Beispiel aus Metall gefüllt sein kann.

Auch bei diesem Ausführungsbeispiel weist die Köderstation 7 oben einen Drahtbügel 15 auf. An diesen schließen sich Verankerungsmittel an, die einen flexiblen Strang 24 in Form eines Drahtseils aufweisen sowie einen Haken 25, der als Mehrfachhaken mit vier Spitzen 26 ausgestaltet ist. Der Haken 25 ist an einer Stange 27 befestigt, an welche wiederum der flexible Strang 24 anschließt.

Eine seitliche Öffnung in der Wand der Köderstation 7 ist bodennah angeordnet und ermöglicht Tieren einen Blick in das Innere der Köderstation 7, so dass eine dort angeordnete Köderschale sowie der darin befindliche Köder unmittelbar und von außerhalb der Köderstation 7 wahrgenommen werden können. Weiterhin ermöglicht die seitliche Öffnung das Eindringen von Wasser in die Köderstation 7, falls der Wasserpegel um die Köderstation 7 herum ansteigt. Und schließlich ist die seitliche Öffnung so groß bemessen, dass sie als Zutrittsöffnung dienen kann, durch welche Tiere in das Innere der Köderstation 7 gelangen können.

Fig. 7 zeigt den flexiblen Strang 24, der an die Stange 27 anschließt, und der durch eine mit Bohrungen versehene Lasche 28 geführt ist. In an sich bekannter Weise kann das Drahtseil so durch die Bohrungen der Lasche 28 geführt werden, dass die wirksame Länge des Drahtseils, nämlich der Abstand zwischen der Stange 27 und dem Drahtbügel 15 der Köderstation 7, eingestellt werden kann.

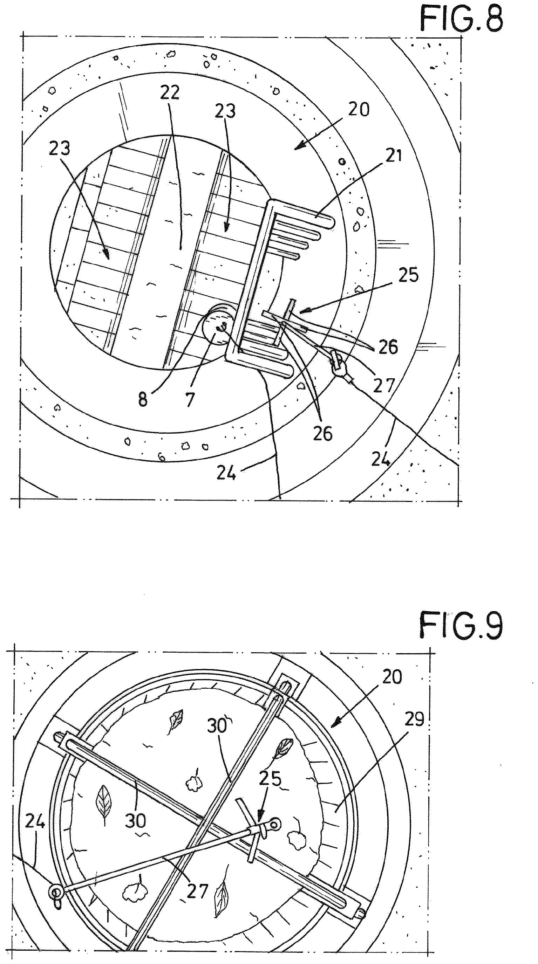

Fig. 8 zeigt einen Kanalisationsschacht 20 wie in Fig. 4, wobei jedoch die Berme 23 des Schachtbodens nicht mit einer Komponente von Verankerungsmitteln versehen ist. Vielmehr ist vorgesehen, die Köderstation 7 mit dem vergleichsweise schweren Schachtboden 8 auf die Berme 23 zu stellen. Das Drahtseil als flexibler Strang 24 wird außen an den Steigbügeln 21 entlang bis zum obersten Steigbügel 21 geführt, anschließend um 180° umgelenkt und innen an den Steigbügeln 21 entlang wieder abgesenkt. Dabei hängt der Stab 27 nach unten, so dass der Haken 25 mit seinen vier Spitzen 26 sich am unteren Ende des Stabes 27 befindet. In Fig. 8 ist der beschriebene Vorgang noch nicht abgeschlossen, so dass der flexible Strang 24 dem obersten Steigbügel 21 noch nicht anliegt, sondern vielmehr in einem weiten Bogen um den obersten Steigbügel 21 verläuft. Beispielsweise besteht bei der Fig. 8 dargestellten Montagesituation die Möglichkeit, die wirksame Länge des Drahtseils einzustellen, beispielsweise mithilfe der in Fig. 7 gezeigten Lasche 28.

Sollte bei den entsprechenden, in der Kanalisation herrschenden Bedingungen die auf der Berme 23 stehende Köderstation 7 fortgeschwemmt werden, so bewirkt der Zug, den die Köderstation 7 über den flexiblen Strang 24 auf den Stab 27 ausgeübt, dass der Stab 27 mitsamt des Hakens 25 angehoben wird. Dabei verfängt sich wenigstens eine der Spitzen 26 an einem der Steigbügel 21, so dass eine weitere Entfernung der Köderstation 7 von ihrem Aufstellungsort verhindert wird und die Köderstation 7 zu einem späteren Zeitpunkt zurückgeholt werden kann.

Fig. 9 zeigt denselben Kanalisationsschacht 20 wie Fig. 8, wobei dieselbe Köderstation 7 mit denselben Verankerungsmitteln verwendet wird wie in Fig. 8. Der flexible Strang 24 ist jedoch über den obersten Steigbügel 21 hinaus nach oben geführt worden, bis auf einen Schmutzfangkorb 29, wobei die Stange 27 mit dem Haken 25 auf dem Schmutzfangkorb 29 liegt. Zwei sich kreuzende Hebestangen 30 sind am Schmutzfangkorb 29 vorgesehen, um den Schmutzfangkorb 29 aus dem Kanalisationsschacht 20 heben zu können. Bei einem Zug an dem flexiblen Strang 24 wird der Haken 25 gegen die Hebestangen 30 gezogen und verhindert eine weitere Entfernung der Köderstation 7 von ihrem Aufstellungsort.

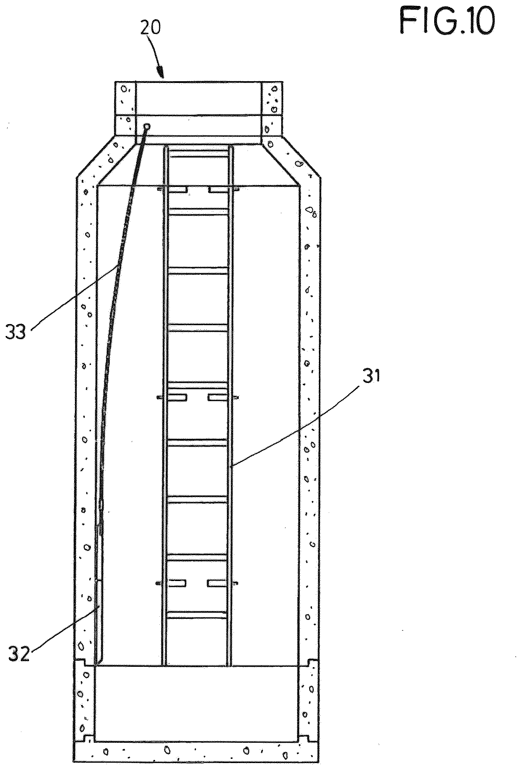

Fig. 10 zeigt einen Vertikalschnitt durch einen Kanalisationsschacht 20. Eine Leiter 31 ermöglicht den Zugang von oben in den Schacht. Eine Wandhalterung 32 dient zur Montage der Köderstation. Die Wandhalterung 32 besteht aus einem Edelstahl-Rechteckrohr und kann mithilfe von Schrauben und Dübeln an der Schachtwand montiert sein. Im Sinne einer optimalen Materialschonung des Kanalisationsschachtes 20 kann die Wandhalterung 32 allerdings auch schraubenlos befestigt sein, indem sie mit der Schachtwand verklebt ist. Von der Wandhalterung 32 erstreckt sich ein Führungsstab 33 nach oben bis in den Schachteingang. Der Führungsstab 33 besteht aus mehreren miteinander verbundenen, beispielsweise verschraubten Stab-Abschnitten aus Edelstahl und mit jeweils etwa 10 mm Durchmesser. Der Führungsstab 33 endet oben mit einer als Kugel ausgestalteten Verdickung, die einen Durchmesser von etwa 20 bis 30 mm aufweist. Die Verdickung reduziert aufgrund ihres Durchmessers Verletzungsgefahren, die ansonsten aufgrund des vergleichsweise geringen Stabdurchmessers bestehen könnten, und ist aufgrund ihres Durchmessers besonders leicht auffindbar. Aus diesem Grund kann die Verdickung auch auffällig eingefärbt sein, beispielsweise signalrot.

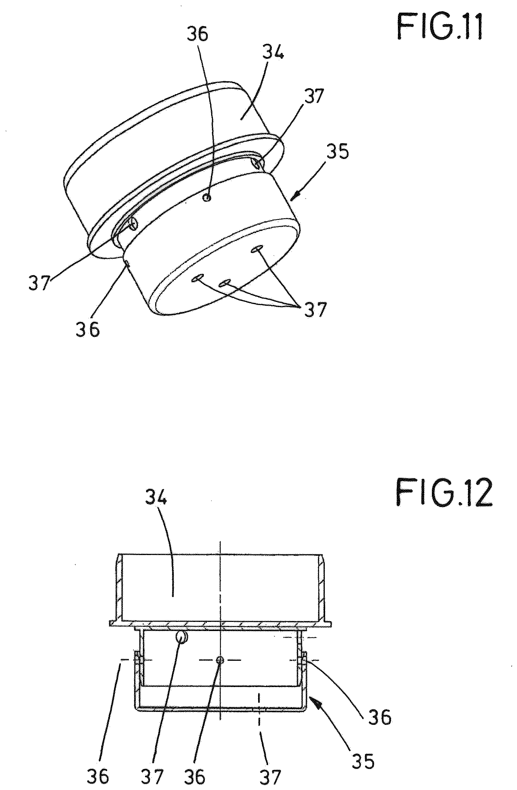

Die Fig. 11 (perspektivisch) und Fig. 12 (Vertikalschnitt) zeigen jeweils eine oben offene Köderschale 34, an deren Unterseite ein zweiteiliger Standfuß 35 befestigt ist. Wie insbesondere Fig. 12 zeigt, sind sowohl die Köderschale 34 als auch die beiden Teile des Standfußes 35 jeweils aus handelsüblichen Abschlusskappen aus Kunststoff gefertigt, wie sie für Kunststoff-Rohrleitungen bekannt sind. Die beiden Teile des Standfußes 35 weisen mehrere miteinander fluchtende Verbindungsbohrungen 36 auf, die dazu dienen, die beiden Teile des Standfußes 35 miteinander zu verbinden, beispielsweise mithilfe von Klemmstiften oder Schrauben. Weiterhin weisen beide Teile des Standfu-ßes 35 jeweils mehrere Wasseröffnungen 37 auf, die dazu dienen, bei einer Überflutung der Köderstation 7 Wasser in den Standfuß 35 eindringen zu lassen. Der geflutete Standfuß 35 entwickelt auf diese Weise keinen Auftrieb. Während die Köderschale 34 aufschwimmen kann, um den darin befindlichen Köder trocken zu halten, bewirkt der von der schwimmenden Köderschale 34 nach unten hängende Standfuß 35 eine Stabilisierung der Köderschale 34, um deren Kentern zu verhindern.

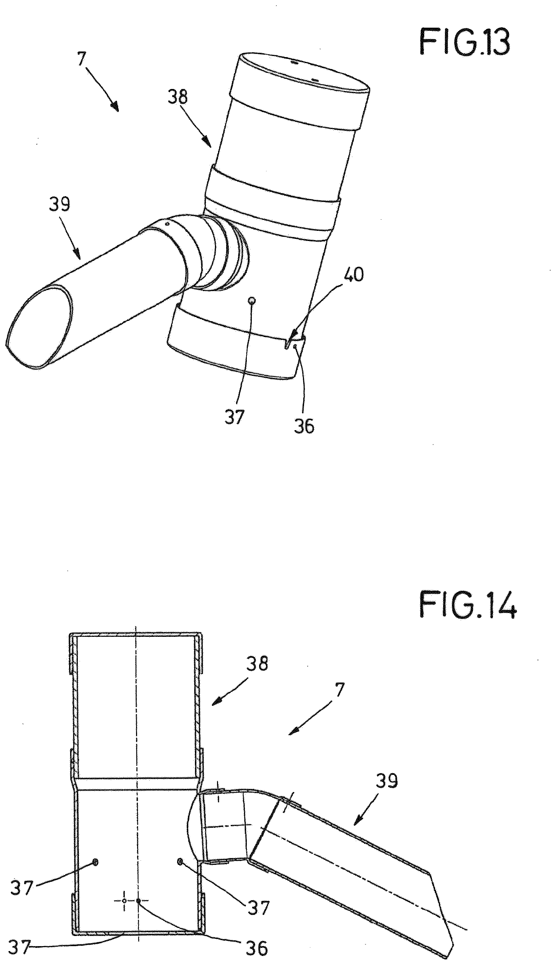

Die Fig. 13 (perspektivisch) und Fig. 14 (Vertikalschnitt) zeigen jeweils ein Gehäuse 38 und einen Aufgang 39 der Köderstation 7. Wie insbesondere Fig. 14 zeigt, bestehen sowohl das Gehäuse 38 als auch der Aufgang 39 aus handelsüblichen Rohrbauteilen aus Kunststoff. Zwei Rohrabschnitte, die als Muffenende und als Spitzende ausgestaltet sind, bilden den zylindrischen Körper des Gehäuses 38. Sie ermöglichen, das Gehäuse wahlweise zu öffnen oder wieder dicht zu verschließen, denn die handelsüblichen Rohrverbindungen stellen mit ihren Dichtungen eine wasserdichte Ausgestaltung dieser Rohrverbindung sicher. Und selbst wenn im Bereich der Rohrverbindung Wasser in das Gehäuse 38 der Köderstation 7 eindringen sollte, so würde dies einen so hoch angestiegenen Wasserpegel bedeuten, dass die Köderschale 34 ohnehin bereits aufgeschwommen ist und der Köder trocken gehalten wird. Da oberhalb der Rohrverbindung das Gehäuse 38 luftdicht ausgestaltet ist, wird im oberen Rohrabschnitt des Gehäuses 38 eine Luftblase gehalten, innerhalb welcher der Köder trocken bleibt. Zwei Abschlusskappen bilden den Boden und den Deckel des Gehäuses 38. Im Boden ist eine große zentrale Wasseröffnung 37 vorgesehen.

Auch in dem unteren, als Muffenende ausgestalteten Teil des Gehäuses 38 sind Wasseröffnungen 37 in Form von Bohrungen angeordnet, so dass das Gehäuse 38 sowohl durch die verschiedenen Wasseröffnungen 37 als auch durch den Aufgang 39 geflutet werden kann. Das Gehäuse 38 ist oberhalb der Stelle, wo der Aufgang 39 an das Gehäuse 38 anschließt, luftdicht ausgestaltet, indem die jeweiligen Bauteile frei von Öffnungen sind und zudem luftdicht aneinander anschließen, z.B. miteinander verklebt sind. Wenn die Köderstation 7 sich in einem ansteigenden Wasserpegel befindet, kann das Wasser zunächst den unteren Teil des Gehäuses 38 fluten, jedoch bildet der obere Bereich des Gehäuses 38 eine Luftkammer, aus der die darin eingeschlossene Luftblase nicht entweichen kann. Vielmehr wird die Luftblase allenfalls aufgrund des Umgebungsdrucks komprimiert und dementsprechend bei steigendem umgebenden Wasserpegel kleiner, so dass auch innerhalb des Gehäuses der Wasserpegel ansteigt und die Köderschale 34 weiter angehoben wird, allerdings nicht in dem Maße, wie außerhalb des Gehäuses 38 der Wasserpegel ansteigt.

Die aus den Fig. 11 und 12 ersichtlich Köderschale 34 steht mit ihrem Standfuß 35 auf dem Boden des Gehäuses 38 und kann ggf. aufschwimmen, wenn Wasser in das Gehäuse 38 eintritt, so dass der Köder in der Köderschale 34 trocken bleibt. Selbst wenn der Wasserpegel außerhalb des Gehäuses 38 hoch ansteigt, verbleibt die Köderschale 34 in der erwähnten Luftblase innerhalb des Gehäuses 38, so dass der Köder vor einem unerwünschten Kontakt mit dem Wasser geschützt ist und umgekehrt das Wasser vor einem Kontakt mit dem Köder und dessen Inhaltsstoffen geschützt ist.

Der Boden des Gehäuses 38 weist eine Einkerbung auf, wie aus Fig. 13 ersichtlich ist. In diese Einkerbung ragt eine Madenschraube, die in einer auch in Fig. 14 ersichtlichen Zentrierbohrung 40 der Wand des Gehäuses 38 angeordnet ist. Auf diese Weise kann der Boden nur in einer einzigen, vorbestimmten Drehwinkelstellung montiert werden. In dieser Stellung fluchten zwei Verbindungsbohrungen 36 des Bodens und des unteren, als Muffenende ausgestalteten Teil des Gehäuses 38 miteinander. Mittels eines Klemmstiftes können diese beiden Bauteile miteinander verbunden werden. Aufgrund der engen Passung reicht ein einziger Klemmstift entlang dem Umfang des Gehäuses 38 aus, um den Boden sicher an dem zylindrischen Körper des Gehäuses 38 zu halten.

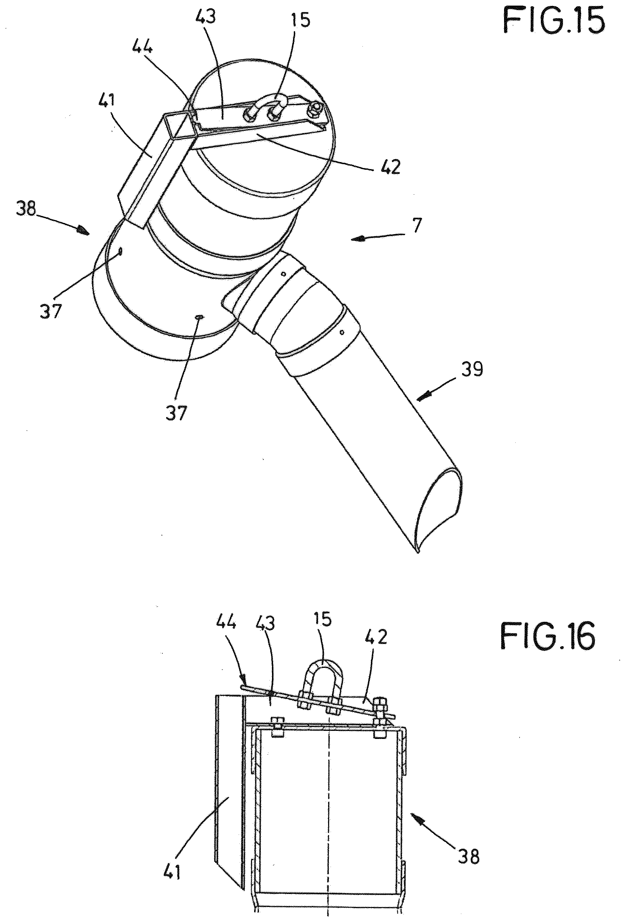

Die Fig. 15 (perspektivisch) und Fig. 16 (Vertikalschnitt) zeigen jeweils insbesondere den oberen Bereich des Gehäuses 38 sowie eine Halterung 41, die als Rechteckrohr mit einem quadratischen Querschnitt ausgestaltet ist. Die Halterung 41 ist mit einer Führungsschiene 42 verbunden, die einen U-förmigen Querschnitt aufweist und mit dem Deckel des Gehäuses 38 luftdicht verschraubt ist, wie insbesondere Fig. 16 zeigt. In der Führungsschiene 42 ist eine Riegellasche 43 schwenkbeweglich gelagert. Hierzu schließt die Regellasche 43 mit entsprechendem Spiel an eine der beiden Schrauben an, die zur Befestigung der Führungsschiene 42 dienen. An ihrem gegenüberliegenden Ende weist die Riegellasche 43 eine Riegelnase 44 auf. Weiterhin ist an der Riegellasche 43 ein Drahtbügel 15 befestigt, der einerseits zur Betätigung der Riegellasche 43 dient und andererseits wie bei den Ausführungsbeispielen der Fig. 1 bis 9 dazu, die gesamte Köderstation 7, bei diesem Ausführungsbeispiel also das gesamte Gehäuse 38 mitsamt dem Aufgang 39 und der im Gehäuse 38 befindlichen Köderschale 34 wahlweise aus dem Kanalisationsschacht 20 anzuheben oder in diesen herabzulassen.

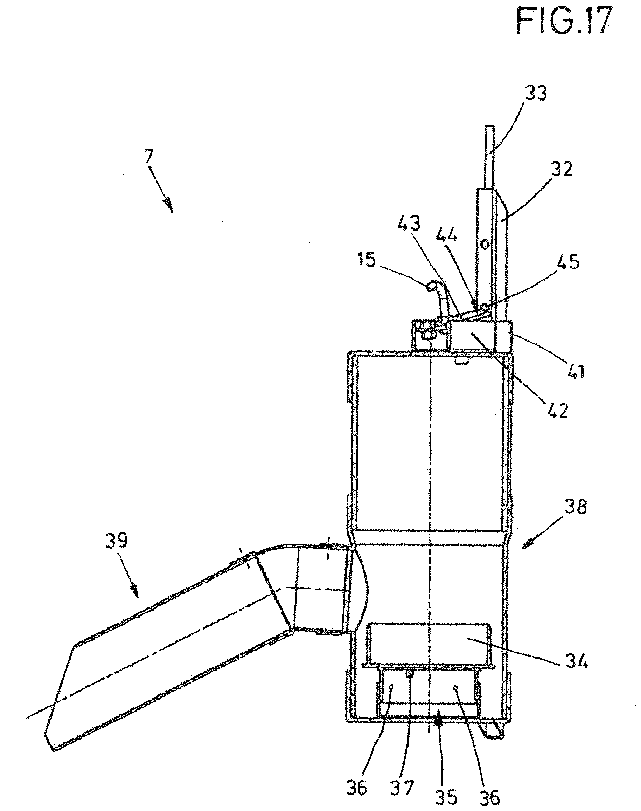

Fig. 17 zeigt einen Vertikalschnitt durch eine fangbereit installierte Köderstation 7. Hierzu ist die Köderschale 34 mit einem Lockmittel bestückt worden und auf den Boden des Gehäuses 38 gestellt worden. Anschließend ist die Köderschale 34 mitsamt dem Boden angehoben und von unten in das Gehäuse 38 eingebracht worden, während der Boden den zylindrischen Körper des Gehäuses 38 außen umgreift und unter Benutzung der Verbindungsbohrungen 36 und des erwähnten Klemmstiftes an diesem zylindrischen Körper befestigt wird.

Das Gehäuse 38 wird anschließend zunächst von Hand gehalten und so geführt, dass die Halterung 41 mit ihrem unteren, offenen Ende auf die Verdickung und dann weiter auf den Führungsstab 33 aufgeschoben und nach unten abgesenkt wird. Im weiteren Verlauf wird das Gehäuse 38 mithilfe des Drahtbügels 15 weiter nach unten abgesenkt, indem beispielsweise ein flexibler Strang 24 wie z.B. ein Seil oder eine Kette an den Drahtbügel 15 anschließt und das Gehäuse 38 an diesem Seil bzw. an dieser Kette nach unten abgelassen werden kann. Dementsprechend kann das Gehäuse 38 im Kanalisationsschacht 20 aufgestellt oder aus dem Kanalisationsschacht 20entfernt werden, ohne dass dazu jemand in den Kanalisationsschacht 20 einsteigen muss.

Mithilfe des Führungsstabes 33 wird die Halterung 41 auf die Wandhalterung 32 geführt, die ebenfalls als Rechteckrohr ausgestaltet ist, aber einen entsprechend kleineren Querschnitt aufweist als die Halterung 41. In der Wandhalterung 32 ist eine Verriegelungsbohrung 45 angeordnet. Abweichend von dem dargestellten Ausführungsbeispiel können mehrere Verriegelungsbohrungen 45 jeweils im Abstand übereinander angeordnet sein. Das Gehäuse 38 wird so weit nach unten abgesenkt, bis es eine vorbestimmte Höhe erreicht, die auf unterschiedliche Weise bestimmt sein kann, beispielsweise durch einen unteren Anschlag der Wandhalterung 32 definiert sein kann.

Wesentlich ist bei dieser Ausführung, dass die Riegellasche 43 sich auf der Höhe oder unterhalb einer Verriegelungsbohrung 45 befindet, und dass das erwähnte Seil bzw. die Kette entspannt werden kann und das Gehäuse 38 nicht ausschließlich durch dieses Seil bzw. die Kette in ihrer gewünschten Höhenlage gehalten wird. Nach Erreichen der gewünschten Höhenlage wird dementsprechend das Seil bzw. die Kette entspannt und das obere Ende nahe unterhalb der Eingangsöffnung des Kanalisationsschachtes 20 befestigt, so dass später das Gehäuse 38 mittels des Seils bzw. der Kette wieder aus dem Kanalisationsschacht 20 heraufgeholt werden kann, ohne den Kanalisationsschacht 20 betreten zu müssen.

Die Riegellasche 43 erstreckt sich, wie aus Fig. 16 ersichtlich, mit ihrer Riegelnase 44 bis über den freien inneren Querschnitt der Halterung 41. Aufgrund der Schrägstellung, welche die Riegellasche 43 einnimmt, wenn das Gehäuse 38 an dem Drahtbügel 15 gehalten wird, endet die Riegelnase 44 außerhalb der Wandhalterung 32. Wird jedoch das Seil bzw. die Kette entlastet, so ist die Riegellasche 43 bestrebt, schwerkraftunterstützt eine flach liegende Stellung in der Führungsschiene 42 einzunehmen. Dabei legt sich die Riegelnase 44 an die Wandhalterung 32 an, so dass die Riegellasche eine nun zwar flachere, aber immer noch leicht schräggestellte Bereitschaftsstellung einnimmt.

Wenn im Kanalisationsschacht 20 der Wasserpegel ansteigt, wird das Gehäuse 38 in seinem unteren Bereich mit Wasser geflutet. Auch der Standfuß 35 der Köderschale 34 wird geflutet. Die Köderschale 34 schwimmt jedoch auf, bei entsprechendem Wasserpegel so weit, bis sich eine Luftblase im oberen Bereich des Gehäuses 38 bildet, der als Luftkammer luftdicht ausgestaltet ist. Der Wasserpegel kann ggf. im Kanalisationsschacht 20 so weit ansteigen, dass die Luftblase im Gehäuse 38 Auftriebskräfte erzeugt, die das Gehäuse 38 anzuheben bestrebt sind. Das Gehäuse 38 wird daher beginnen, nach oben aufzuschwimmen, wobei die Halterung 41 an der Wandhalterung 32 nach oben gleitet. Dabei gleitet auch die Riegelnase 44 an der Wandhalterung 32 nach oben, und zwar bis zum Erreichen einer Verriegelungsbohrung 45. Die Riegelnase wird dann in die Verriegelungsbohrung 45 eingreifen, so dass sich die Riegellasche 43 aus ihrer schräg stehenden Bereitschaftsstellung in eine flacher liegende Regelstellung nach unten absenkt. Wenn das Gehäuse 38 noch weiter aufzuschwimmen bestrebt ist, gerät die Riegelnase 44 an den oberen Rand der Verriegelungsbohrung 45, so dass eine weitere Aufwärtsbewegung des Gehäuses 38 verhindert wird. Bei sinkendem Wasserpegel kann das Gehäuse 38 wieder absinken, wobei die Halterung 15 und auch die Riegellasche 43 an der Wandhalterung 32 nach unten gleitet, wie dies bereits beim Einsetzen des Gehäuses 38 in den Kanalisationsschacht 20 der Fall war.

Durch das Zusammenwirken mit der Wandhalterung 32 ist sichergestellt, dass das Gehäuse 38 und die darin befindliche Köderschale 34 auch bei turbulenten Strömungen und hohen Wasserpegeln innerhalb des Kanalisationsschachtes 20 stets eine definierte Stellung beibehalten. Dadurch ist ausgeschlossen, dass der Köder aus der Köderschale 34 herausfallen bzw. herausgeschleudert werden kann. Zudem ist durch die Konstruktion der Köderschale 34 und ihres Standfußes 35 sowie durch das eine Luftblase einschließende Gehäuse 38 sichergestellt, dass ein Kontakt des Köder mit dem Wasser vermieden wird.

Bei dem Ausführungsbeispiel der Köderstation 7 nach den Fig. 10 bis 17 bildet die Wandhalterung 32 die erste Komponente der Verankerungsmittel, und die Halterung 41 bildet die zweite Komponente der Verankerungsmittel, um die Köderstation 7 im Kanalisationsschacht ortsfest zu verankern.

Die Köderschale 34, mit oder ohne Standfuß 35, kann auch bei einer Köderstation verwendet werden, die anders als in den Ausführungsbeispielen dargestellte Köderstation 7 ausgestaltet ist. Beispielsweise kann sie ohne den Aufgang 39 des Ausführungsbeispiels der Fig. 10 bis 17 ausgestaltet sein, sowie weiterhin auch abweichend von den Ausführungsbeispielen der Fig. 1 bis 9 kann eine Köderstation so ausgestaltet sein, dass sie bei steigendem Wasserpegel ein Luftpolster schafft, in welchem der auf der Köderschale 34 liegende Köder, der auch als Lockmittel bezeichnet wird, trocken gehalten wird, selbst wenn der umgebende Wasserpegel höher steigt als das Lockmittel.

### Bezugszeichen:

- 1: Erste Komponente von Verankerungsmitteln
- 2: Grundplatte
- 3: Konturscheibe
- 4: Freiraum
- 5: Halteabschnitt
- 6: Anschlag
- 7: Köderstation
- 8: Boden
- 9: Zweite Komponente von Verankerungsmitteln
- 10: Zapfen
- 11: Schraube
- 12: Elastomerring
- 14: Unterlegscheibe
- 15: Drahtbügel
- 16: Öse
- 17: Betätigungselement
- 18: Block
- 19: Große Schraube
- 20: Kanalisationsschacht
- 21: Steigbügel
- 22: Gerinne
- 23: Berme
- 24: Flexibler Strang
- 25: Haken
- 26: Spitze
- 27: Stange
- 28: Lasche
- 29: Schmutzfangkorb
- 30: Hebestange
- 31: Leiter
- 32: Wandhalterung
- 33: Führungsstab
- 34: Köderschale
- 35: Standfuß
- 36: Verbindungsbohrung
- 37: Wasseröffnung
- 38: Gehäuse
- 39: Aufgang
- 40: Zentrierbohrung
- 41: Halterung
- 42: Führungsschiene
- 43: Riegellasche
- 44: Riegelnase
- 45: Verriegelungsbohrung

## Patentansprüche

1. Köderstation (7),
mit einem nach unten offenen und nach oben luftdichten Gehäuse (38) in der Art, dass die Wasserhöhe im Gehäuse (38) dadurch begrenzt ist, dass im oberen Bereich des Gehäuses (38) bei entsprechend hohen Wasserpegeln eine Luftblase eingeschlossen ist,
und mit einer zur Aufnahme des Köders bestimmten Köderhalterung, die innerhalb des Gehäuses (38) angeordnet ist,
wobei die Köderhalterung schwimmfähig ausgestaltet ist und das Gehäuse (38) im unteren Bereich Wasseröffnungen (37) aufweist,
derart, dass Wasser durch die Wasseröffnungen in das Gehäuse (38) eindringen kann und die Köderhalterung im Gehäuse (38) bei steigendem Wasserpegel aufschwimmen kann,
**dadurch gekennzeichnet,**
**dass** die Köderhalterung als schwimmfähige Köderschale (34) ausgestaltet ist.

2. Köderstation nach Anspruch 1,
**dadurch gekennzeichnet,**
**dass** die Köderschale (34) unten einen Standfuß (35) aufweist, der ebenfalls das Ein- und Ausströmen von Wasser ermöglichende Wasseröffnungen (37) aufweist.

3. Köderstation nach Anspruch 1 oder 2,
**dadurch gekennzeichnet,**
**dass** das Gehäuse (38) unten in der Art geschlossen ausgestaltet ist, dass die Köderschale (34) auf einem Boden des Gehäuses (38) abstellbar ist.

4. Köderstation nach einem der vorhergehenden Ansprüche, **dadurch gekennzeichnet,**
**dass** das Gehäuse (38) eine seitliche, einen Eingang bildende Öffnung aufweist.

5. Köderstation nach Anspruch 4,
**dadurch gekennzeichnet,**
**dass** ein schräg aufwärts verlaufender Aufgang (39) zu dem Eingang führt.

6. Köderstation nach einem der vorhergehenden Ansprüche, **dadurch gekennzeichnet,**
**dass** das Gehäuse (38) aus handelsüblichen Rohrbauteilen aus Kunststoff gebildet ist.

7. Köderstation nach Anspruch 6,
**dadurch gekennzeichnet,**
**dass** das Gehäuse (38) einen zylindrischen Körper aufweist, der aus zwei Rohrabschnitten gebildet ist, die als Muffenende und als Spitzende ausgestaltet sind.

8. Köderstation nach den Ansprüchen 3 und 6,
**dadurch gekennzeichnet,**
**dass** eine handelsübliche Rohr-Abschlusskappe den Boden bildet, der einen unteren zylindrischen Abschnitt des Gehäuses (38) verschließt.

9. Köderstation nach einem der vorhergehenden Ansprüche, **dadurch gekennzeichnet,**
**dass** die Köderstation (7) Verankerungsmittel aufweist, welche zur Festlegung in einem Kanalisationsschacht (20) bestimmt sind,
wobei der Köderstation (7) ein Betätigungselement (17) zugeordnet ist,
welches mit einem unteren Ende an die Verankerungsmittel und / oder an die Köderstation (7) anschließt oder anschließbar ist,
und das ein oberes Ende aufweist, das dazu bestimmt ist, bis in die Nähe der Schachtmündung oder über die Schachtmündung hinaus zu ragen, derart, dass es von außerhalb des Kanalisationsschachtes (20) betätigbar ist.

10. Köderstation nach Anspruch 9,
**dadurch gekennzeichnet,**
**dass** die Verankerungsmittel bis in die Nähe der Schachtmündung geführt sind.

11. Köderstation nach Anspruch 9 oder 10,
**dadurch gekennzeichnet,**
**dass** die Verankerungsmittel einen flexiblen Strang (24) aufweisen sowie einen im Abstand von der Köderstation (7) an dem Strang (24) befestigten Haken (25).

12. Köderstation nach Anspruch 9,
**dadurch gekennzeichnet,**
**dass** die Verankerungsmittel zwei lösbar miteinander verbundene Komponenten (1, 9) aufweisen,
wobei eine erste Komponente (1) dazu bestimmt ist, im Kanalisationsschacht (20) festgelegt zu werden,
und die zweite Komponente (9) unten an der Köderstation (7) angeordnet ist,
derart, dass die Köderstation (7) mit der zweiten Komponente (9) der Verankerungsmittel von oben auf die erste Komponente (1) der Verankerungsmittel absenkbar ist und die beiden Komponenten (1, 9) durch eine weitere Bewegung der Köderstation (7) verriegelbar sind.

## Claims

1. Bait station (7), with a housing (38) that is open at the bottom and air-tight at the top up in such a way that the water level in the housing (38) is limited by the fact that an air bubble is trapped in the upper section of the housing (38) when the water reaches a correspondingly high level and with a bait holder intended to incorporate the bait which is placed within the housing (38), where the bait holder is designed to float and the housing (38) has water holes (37) in the lower section, such that water can enter the housing (38) through the water holes and the bait holder in the housing (38) can float when the water level rises, **characterised in that** the bait holder is designed as a buoyant bait tray (34).

2. Bait station in accordance with claim 1, **characterised in that** the bait tray (34) has a foot (35) at the bottom, which also has water holes (37) allowing water to flow in and out.

3. Bait station in accordance with claim 1 or claim 2, **characterised in that** the housing (38) is closed at the bottom in such a way that the bait tray (34) can be placed on a housing base (38).

4. Bait station in accordance with any one of the preceding claims, **characterised in that** the housing (38) has a side opening forming an entrance.

5. Bait station in accordance with claim 4, **characterised in that** an upwardly sloping ascent (39) leads to the entrance.

6. Bait station in accordance with any one of the preceding claims, **characterised in that** the housing (38) is made of commercially available plastic pipe elements.

7. Bait station in accordance with claim 6, **characterised in that** the housing (38) has a cylindrical body, which is formed from two pipe sections, which are designed as a socket end and a spigot end.

8. Bait station in accordance with claims 3 and 6, **characterised in that** a commercially available pipe end cap forms the base, which seals a lower cylindrical section of the housing (38).

9. Bait station in accordance with any one of the preceding claims, **characterised in that** the bait station (7) has anchoring means, which are intended for fixing in a manhole (20), where an actuating element (17) is attached to the bait station (7), which is or can be connected at a lower end to the anchoring means and/or to the bait station (7), and which has an upper end that is intended to project into the vicinity of or beyond the mouth of the manhole in such a way that it can be actuated from outside the manhole (20).

10. Bait station in accordance with claim 9, **characterised in that** the anchoring means are guided into the vicinity of the mouth of the manhole.

11. Bait station in accordance with claim 9 or claim 10, **characterised in that** the anchoring means have a flexible cord (24) and a hook (25) attached to the cord (24) at a distance from the bait station (7).

12. Bait station in accordance with claim 9, **characterised in that** the anchoring means have two components (1, 9) detachably connected to one another, where a first component (1) is intended to be fixed in the manhole (20) and the second component (9) is placed at the bottom of the bait station (7), such that the bait station (7) can be lowered with the second component (9) of the anchoring means from above onto the first component (1) of the anchoring means and that the two components (1, 9) can be locked by a further movement of the bait station (7).

## Revendications

1. Poste d'appât (7), comprenant un boîtier (38) ouvert vers le bas et étanche à l'air vers le haut, de sorte que la hauteur de l'eau dans le boîtier (38) est limitée du fait que dans la partie supérieure du boîtier (38) une bulle d'air reste prisonnière en présence de niveaux d'eau d'une hauteur correspondante, et comprenant un support, destiné à recevoir l'appât, qui est disposé à l'intérieur du boîtier (38), sachant que le support d'appât est configuré capable de flotter et que le boîtier (38) présente, dans sa partie inférieure, des ouvertures (37) de pénétration d'eau, faisant que l'eau peut pénétrer dans le boîtier (38) par ces ouvertures et que le support d'appât dans le boîtier (38) peut se mettre à flotter lorsque le niveau d'eau monte, **caractérisé en ce que** le support d'appât est configuré comme une coupelle à appât (34) capable de flotter.

2. Poste d'appât selon la revendication 1, **caractérisé en ce que** la coupelle à appât (34) présente en bas un pied support (35) qui lui aussi présente des ouvertures (37) permettant à l'eau d'affluer et de s'écouler.

3. Poste d'appât selon la revendication 1 ou 2, **caractérisé en ce que** le boîtier (38) est configuré fermé en bas, de sorte que la coupelle à appât (34) peut être déposée sur un fond du boîtier (38).

4. Poste d'appât selon l'une des revendications précédentes, **caractérisé en ce que** le boîtier (38) présente une ouverture latérale formant une entrée.

5. Poste d'appât selon la revendication 4, **caractérisé en ce qu'**un conduit (39) au tracé oblique montant conduit à l'entrée.

6. Poste d'appât selon l'une des revendications précédentes, **caractérisé en ce que** le boîtier (38) est formé à partir de composants tubulaires du commerce en matière plastique.

7. Poste d'appât selon la revendication 6, **caractérisé en ce que** le boîtier (38) présente un corps cylindrique formé à partir de deux segments tubulaires configurés en extrémité à manchon et en extrémité pointue.

8. Poste d'appât selon l'une des revendications 3 et 6, **caractérisé en ce qu'**une coiffe terminale pour tube, en vente habituelle dans le commerce, forme le fond qui obture un segment cylindrique inférieur du boîtier (38).

9. Poste d'appât selon l'une des revendications précédentes, **caractérisé en ce que** le poste d'appât (7) présente des moyens d'ancrage destinés à le fixer dans un regard (20) de canalisation d'égout, sachant qu'au poste d'appât (7) est affecté un élément d'actionnement (17), qui par son extrémité inférieure est raccordé ou est raccordable aux moyens d'ancrage et/ou au poste d'appât (7), et qui présente une extrémité supérieure destinée à faire saillie jusqu'à proximité de la bouche du regard ou au-delà de la bouche du regard, de sorte qu'il est actionnable depuis l'extérieur du regard (20) de canalisation d'égout.

10. Poste d'appât selon la revendication 9, **caractérisé en ce que** les moyens d'ancrage sont disposés jusqu'à proximité de la bouche du regard.

11. Poste d'appât selon la revendication 9 ou 10, **caractérisé en ce que** les moyens d'ancrage présentent un filin (24) flexible ainsi qu'un crochet (25) fixé contre le filin (24) à distance de la station d'appât (7).

12. Poste d'appât selon la revendication 9, **caractérisé en ce que** les moyens d'ancrage présentent deux composants (1, 9) reliés entre eux de façon détachable, sachant qu'un premier composant (1) sert à être fixé dans le regard (20) de la canalisation d'égout et que le deuxième composant (9) est disposé en bas contre le poste d'appât (7), de sorte que le poste d'appât (7) est abaissable du haut, avec le deuxième composant (9) des moyens d'ancrage, sur le premier composant (1) des moyens d'ancrage, et que les deux composants (1, 9) sont verrouillables par un mouvement supplémentaire du poste d'appât (7).
